# FASCICULE DE BREVET EUROPEEN

(11) **EP 0 766 919 B1**
(45) Date de publication et mention de la délivrance du brevet: **12.01.2000**
(21) Numéro de dépôt: 96402099.4
(22) Date de dépôt: 02.10.1996
(51) Int. Cl.: A01N 59/20

(54) **Bouillie bordelaise, son procédé de fabrication et compositions fongicides cupriques la contenant**
Bordeaux-Brühe, Verfahren zu ihrer Herstellung und diese enthaltende Kupfer-Fungizide
Bordeaux mixture, process for its manufacture and cupric fungicidal compositions containing it

(30) Priorité: 03.10.1995 FR 9511593
(43) Date de publication de la demande: 09.04.1997
(73) Titulaire: ELF ATOCHEM AGRI S.A., 78370 Plaisir (FR)
(72) Inventeur: Courtade, Michel, 78110 Le Vesinet (FR); Ramel, Georges, 13340 Rognac (FR)
(74) Mandataire: Leboulenger, Jean

(56) Documents cités:
- US-A- 3 846 545
- D.E.H. FREAR: "Chemistry of insecticides, fungicides and herbicides." 1948 , VAN NOSTRAND , NEW YORK XP002006216 2ième édition, chapitre XIII: copper compounds, pages 211-217: Bordeaux mixture * page 213, alinéa 1 - alinéa 2 *
- W. GERHARTZ ET AL.: "Ullmann's Encyclopedia of Industrial Chemistry." 1986 , VCH VERLAG , WEINHEIM, DE XP002006217 5ième édition, volume A7, pages 582-583: Basic Copper(II) Sulfates

## Description

La présente invention concerne le domaine des produits phytosanitaires et a plus particulièrement pour objet une nouvelle bouillie bordelaise, sa fabrication et son emploi pour la préparation de compositions fongicides cupriques sous forme de poudres, granulés ou suspensions concentrées, dispersibles dans l'eau.

Les traitements fongicides de la vigne, d'une pratique courante à l'heure actuelle, trouvent leur origine dans l'apparition, au 19ème siècle, de deux champignons parasites originaires d'Amérique:
- l'oïdium (Uncinula Necator) introduit en France en 1847
- le mildiou (Plasmopara Viticola) introduit en France en 1878 qui sont devenus depuis des parasites endémiques.

Pour lutter contre ces parasites, on continue d'utiliser deux produits d'origine minérale (le soufre contre l'oïdium et le cuivre contre le mildiou) car leur emploi en traitements successifs n'induit pas de phénomène de résistance comme c'est souvent le cas avec les fongicides de synthèse.

En ce qui concerne le cuivre, la forme sulfate est apparue la plus simple à utiliser du fait de sa solubilité dans l'eau. Toutefois, l'acidité de cette solution provoquant des brûlures sur les feuilles de la vigne, il s'est avéré nécessaire d'y incorporer un produit de caractère basique pour diminuer l'acidité par neutralisation. La chaux et le carbonate de calcium ont été utilisés à cet effet donnant naissance à ce qu'on appelle:
- la bouillie bordelaise pour le mélange de sulfate de cuivre avec un lait de chaux,
- la bouillie bourguignonne pour le mélange de sulfate de cuivre avec le carbonate de calcium.

La bouillie bordelaise est devenue peu à peu le produit le plus employé en viticulture et son emploi comme fongicide s'est même étendu à d'autres cultures (mildiou de la tomate, mildiou de la pomme de terre, mildiou de la banane) et sur d'autres parasites, en particulier bactériose et tavelure des arbres fruitiers.

Les deux procédés les plus courants de production industrielle d'une bouillie bordelaise sont :
- le procédé direct consistant en l'introduction d'un lait de chaux dans une solution aqueuse de sulfate de cuivre,
- le procédé inverse selon lequel on introduit une solution aqueuse de sulfate de cuivre dans un lait de chaux.

Toutefois, quel que soit le procédé utilisé et malgré les améliorations techniques réalisées, les compositions fongicides formulées à partir des bouillies bordelaises industrielles actuelles présentent souvent des inconvénients au moment de leur emploi, en particulier:
- mauvaise dispersion dans l'eau
- production d'un dépôt collant dans la cuve du pulvérisateur entraînant le bouchage des jets
- apparition de brûlures sur les feuilles du fait de l'acidité du produit.

L'utilisation d'une bouillie bordelaise classique dans la formulation d'une suspension concentrée aqueuse (formulation liquide du type SC) entraîne lors du stockage la gélification et la prise en masse de la suspension. Dans la formulation de granulés dispersibles dans l'eau (formulation de type WG), l'utilisation d'une bouillie bordelaise classique entraîne lors d'un stockage un renforcement de la cohésion des granulés avec, comme effet, une mauvaise redispersion de ceux-ci lors de l'emploi. L'utilisation d'une bouillie bordelaise classique dans la formulation d'une poudre mouillable (formulation de type WP) entraîne, lors de la mise en suspension de cette poudre dans l'eau, la formation d'un dépôt collant.

L'analyse aux rayons X d'une bouillie bordelaise classique fait apparaître une composition polyphasée et variable de complexes de cuivre, constituée de :
- dévillite: Ca[Cu₄(SO₄)₂(OH)₆], 3H₂0
- posnjakite: Cu₄(SO₄)(OH)_{6 ,} H₂0
- brochantite: Cu₄(SO₄)(OH)₆
- antlérite: Cu₃(SO₄)(OH)₄
ainsi qu'une composition polyphasée et variable de complexes calciques, constituée de :
- gypse: CaSO₄, 2 H₂0
- bassanite: CaSO₄, 1/2 H₂O

Il a maintenant été trouvé que les inconvénients précités sont essentiellement dus à la présence de complexes cupriques autres que la brochantite et à un excès de bassanite, et qu'on peut y remédier en utilisant une bouillie bordelaise dans laquelle la quasi totalité du cuivre est à l'état de brochantite et qui, à l'état sec, ne contient pas plus de 20 % en poids de bassanite.

L'invention a donc d'abord pour objet une bouillie bordelaise sous forme d'une suspension aqueuse dont les matières solides consistent essentiellement en environ 47 % en poids de brochantite et 53% en poids de gypse, ainsi qu'une bouillie bordelaise sèche constituée d'environ 47% en poids de brochantite, de 33 à 53 % en poids de gypse et de 0 à 20 % en poids de bassanite.

L'invention a également pour objet un procédé de fabrication d'une telle bouillie bordelaise de qualité constante, et son utilisation pour la préparation des produits formulés demandés par le marché :
- bouillie bordelaise comme seul fongicide
- association de cette bouillie bordelaise avec au moins un fongicide de synthèse
suivant les présentations suivantes :
- formulations de type WP (poudre mouillable) dispersibles dans l'eau
- formulations de type WG (granulé dispersible) à granulométrie apparente plus élevée (de l'ordre de 50 à 400 µm) dispersibles dans l'eau ne dégageant pas ou peu de poussières au moment de leur emploi
- formulations liquides de type SC (suspensions concentrées) dispersibles aussi dans l'eau.

Une bouillie bordelaise humide selon l'invention peut être obtenue en faisant réagir une solution aqueuse de sulfate de cuivre et une suspension aqueuse de chaux à une température et pendant un temps suffisants pour transformer la quasi totalité des complexes de cuivre en brochantite.

Pour obtenir la formation exclusive de brochantite, il est nécessaire que le rapport molaire Ca(OH)₂/CuSO₄ soit compris entre 0,60 et 0,75 et, de préférence, entre 0,65 et 0,70 environ.

La concentration en cuivre de la solution aqueuse de sulfate de cuivre n'est pas un paramètre critique et n'est limitée que par la solubilité du sulfate de cuivre à la température de mise en oeuvre. Industriellement, on peut utiliser une solution aqueuse de sulfate de cuivre ayant une teneur en cuivre allant de 20 à 100 g/l. Cependant, pour éviter une trop grande dilution du milieu réactionnel, il est préférable d'utiliser une solution de sulfate de cuivre dont la teneur en cuivre est comprise entre 50 et 100 g/l et, plus particulièrement, entre 75 et 85 g/l.

La concentration en hydroxyde de calcium de la suspension aqueuse de chaux n'est pas non plus un paramètre critique et peut varier dans de larges limites en fonction de la granulométrie de la chaux mise en oeuvre. Industriellement, on peut utiliser une suspension aqueuse ayant une teneur en Ca(OH)₂ allant de 20 à 200 g/l et, de préférence, comprise entre 100 et 150 g/l.

Bien que le procédé selon l'invention puisse être réalisé en mélangeant simultanément le lait de chaux et la solution aqueuse de sulfate de cuivre ou en introduisant le lait de chaux dans la solution aqueuse de sulfate de cuivre (procédé direct), on préfère opérer selon le procédé inverse consistant à introduire la solution aqueuse de sulfate de cuivre dans le lait de chaux.

La réaction peut être réalisée à une température allant de la température ambiante jusqu'à 90°C, mais on opère de préférence entre environ 40 et 70°C. Le temps de réaction suffisant pour transformer en brochantite tous les complexes de cuivre dépend de nombreux facteurs, notamment de la température, de l'agitation et de la concentration du milieu réactionnel. Dans certaines conditions, la transformation quasi totale des complexes de cuivre en brochantite peut être obtenue en environ 30 minutes. Il est cependant recommandé de maintenir le mélange en réaction pendant au moins deux heures et, éventuellement, de s'assurer de l'absence de complexes de cuivre autres que la brochantite par un examen aux rayons X du produit réactionnel.

Celui-ci se présente sous forme d'une suspension aqueuse plus ou moins concentrée qui ne contient pas de bassanite et qui, éventuellement après concentration sous forme de pâte (par exemple, par centrifugation), peut être utilisée directement pour la fabrication de formulations fongicides de type SC (suspensions liquides concentrées) ou de type WG (granulés) dispersibles dans l'eau, stables au stockage.

Pour la fabrication de poudres mouillables du type WP, la pâte obtenue après concentration nécessite d'être séchée. Conformément à la présente invention, ce séchage doit être réalisé dans des conditions telles que la teneur en bassanite du produit sec n'excède pas 20%. La teneur en bassanite formée au séchage dépend de nombreux facteurs, notamment de la température, de la durée et de l'appareillage de séchage mis en oeuvre (étuve, tour de séchage, tunnel de séchage). Elle peut être facilement contrôlée par l'analyse du titre en cuivre du produit sec, qui ne doit pas dépasser 27,3 % en poids.

A partir de la bouillie bordelaise (pâte ou poudre) selon l'invention, la fabrication des formulations fongicides s'effectue de façon connue en soi en utilisant les adjuvants usuels (dispersants, mouillants, agents anti-mousse, colorants, épaississants, charges inertes, correcteurs de pH). Il suffit de remplacer la bouillie bordelaise classique (pâte ou poudre) par une bouillie bordelaise selon l'invention en une quantité équivalente en cuivre.

Dans les exemples suivants qui illustrent l'invention, les parties et les pourcentages s'entendent en poids sauf mention contraire.

### EXEMPLE 1

Dans un réacteur on a chargé 8 litres d'une suspension aqueuse de chaux à 130 g/l (soit 14 moles d'hydroxyde de calcium). Dans cette suspension mise sous agitation et portée à 40-50°C, on a ensuite introduit en 5 minutes 16 litres d'une solution aqueuse de sulfate de cuivre à 80 g/l de cuivre (soit 20 moles de CuSO₄).

Après 5 heures de réaction, on a filtré le mélange et obtenu ainsi 9,66 kg d'une pâte de Bouillie Bordelaise à 50 % d'extrait sec (ci-après "pâte BB 50") qui, par séchage en étuve à une température n'excédant pas 90°C, a fourni un solide (ci-après "BB sèche") présentant les caractéristiques suivantes:
- teneur en cuivre : 26,5 % ± 0,5

- teneur en plâtre : traces
- teneur en eau : < 1 %
- pH à 1% dans l'eau distillée : 6,5 ± 0,5

L'analyse aux rayons X montre que ce solide est constitué d'un coprécipité de brochantite (46,7 %) et de gypse (53,3 %), avec seulement des traces de bassanite et d'autres complexes de cuivre.

### EXEMPLE 2 (Comparatif)

On a opéré comme à l'exemple 1, mais en effectuant le séchage à 100°C pendant 10 heures. On a alors obtenu un solide, non conforme à l'invention, constitué de brochantite (51 %) et de bassanite (49 %), présentant les caractéristiques suivantes:
- teneur en cuivre : 28 % ± 0,5
- teneur en gypse : 0 %
- teneur en eau : 0 %
- pH à 1% dans l'eau distillée : 6,5 ± 0,5

### EXEMPLE 3

Dans un mélangeur on a introduit successivement 75,5 parties de "BB sèche", 6 parties de lignosulfonate de sodium (dispersant), 0,5 partie de naphtalènesulfonate de sodium (agent mouillant), 0,5 partie d'un agent anti-mousse (silicone) et 17,5 parties de kaolin, puis on a broyé le mélange et obtenu une poudre de Bouillie Bordelaise WP à 20 % de cuivre présentant, selon les méthodes CIPAC, les caractéristiques physiques suivantes:
- mouillabilité : < 60 s
- rejet humide 45µm : < 1 %
- pouvoir suspensif : > 80 %
- mousse : < 20 ml

Dans cette formulation dispersible dans l'eau, on peut sans inconvénient ajouter un colorant tel que le Bleu de Prusse.

### EXEMPLE 4

Dans le même appareillage qu'à l'exemple 3, on a chargé 45,5 parties de "BB sèche", 35,3 parties de mancozèbe technique à 85 %, 6 parties de lignosulfonate de sodium, 0,5 partie de naphtalènesulfonate de sodium, 0,5 partie de silicone, 1 partie de Bleu de Prusse et 11,2 parties de kaolin.

Après broyage, on a obtenu une poudre mouillable à 12 % de cuivre et 30 % de mancozèbe, présentant des caractéristiques physiques similaires à celles de la poudre de l'exemple 3.

Dans cette formulation plus particulièrement destinée au traitement anti-mildiou de la vigne, on peut remplacer tout ou partie du mancozèbe par un autre fongicide de synthèse tel que manèbe, zinèbe ou folpel.

### EXEMPLE 5

Dans le même appareillage qu'à l'exemple 3, on a chargé 56,7 parties de "BB sèche", 22 parties de zinèbe technique à 91 %, 2,5 parties de cymoxanil technique à 96 %, 6 parties de lignosulfonate de sodium, 0,5 partie de naphtalènesulfonate de sodium, 0,5 partie de silicone et 11,8 parties de kaolin, puis on a broyé le mélange.

On a ainsi obtenu une poudre mouillable contenant 15 % de cuivre, 20 % de zinèbe et 2,4 % de cymoxanil, et présentant des caractéristiques physiques similaires à celles de la poudre de l'exemple 3.

Dans cette formulation plus particulièrement destinée au traitement anti-mildiou de la vigne, tout ou partie du zinèbe peut être remplacé par un autre fongicide de synthèse tel que mancozèbe ou folpel.

### EXEMPLE 6

Dans une cuve munie d'un agitateur, on a mélangé 151 parties de "pâte BB 50" et 38 parties d'eau pour obtenir une pâte fluide (slurry) de faible viscosité (environ 100 mPa.s sous un taux de cisaillement de 111 s⁻¹) et de faible granulométrie (2 à 5 µm).

Dans cette pâte fluide, on a ensuite introduit 14 parties de lignosulfonate de sodium, 0,5 partie de naphtalènesulfonate de sodium, 0,5 partie de silicone et 9,5 parties de kaolin.

Le mélange a ensuite été envoyé dans une tour de séchage (spray dryer) et on a obtenu ainsi des granulés facilement dispersibles dans l'eau, présentant les caractéristiques suivantes (méthode CIPAC) :
- teneur en cuivre : 20 %
- mouillabilité : < 30 s
- rejet humide 45µm : < 1 %
- pouvoir suspensif : > 80 %
- mousse : < 20 ml

### EXEMPLE 7

En opérant comme au premier paragraphe de l'exemple 6 avec 129 parties de "pâte BB 50" et 32 parties d'eau, on a préparé une pâte fluide qu'on a mélangée avec:
- 11 parties de manèbe technique à 91 %
- 14 parties de lignosulfonate de sodium
- 0,5 partie de naphtalènesulfonate de sodium
- 0,5 partie de silicone
- 9,5 parties de kaolin

Après séchage du mélange comme à l'exemple 6, on a obtenu des granulés WG à 17 % de cuivre et 10 % de manèbe, présentant des caractéristiques physiques analogues à celles des granulés de l'exemple 6.

### EXEMPLE 8

On a répété l'exemple 7 mais en utilisant les constituants suivants :
- 114 parties de "pâte BB 50"
- 28 parties d'eau
- 24 parties de mancozèbe technique à 85 %
- 2,5 parties de cymoxanil technique à 96 %
- 14 parties de lignosulfonate de sodium
- 0,5 partie de naphtalènesulfonate de sodium
- 0,5 partie de silicone
- 1,5 parties de kaolin

On a obtenu des granulés WG à 15 % de cuivre, 20 % de mancozèbe et 2,4 % de cymoxanil, facilement dispersibles dans l'eau et présentant des caractéristiques physiques très voisines de celles des granulés des exemples 6 et 7.

### EXEMPLE 9

Dans une cuve munie d'un agitateur, on a introduit simultanément 1132 g de "pâte BB 50" et 126 g d'eau, puis à la pâte fluide (slurry) ainsi obtenue on a ajouté 40 g de lignosulfonate de sodium, 7,5 g de Bleu de Prusse, 3,8 g d'anti-mousse silicone et 90 g d'une solution aqueuse à 2,5 % d'un épaississant (polysaccharide du type gomme xanthane).

On a obtenu ainsi une Bouillie Bordelaise liquide à 150 g/l de cuivre présentant les caractéristiques suivantes (méthode CIPAC) :
- rejet humide 45µm : < 1 %
- pouvoir suspensif : > 80 %
- mousse : < 20 ml

### EXEMPLE 10

On a répété l'exemple 9 mais en utilisant les constituants suivants :
- 755 g de "pâte BB 50" diluée avec 230 g d'eau
- 40 g de lignosulfonate de sodium
- 5 g de naphtalènesulfonate de sodium
- 7,5 g de Bleu de Prusse
- 3,8 g d'anti-mousse silicone
- 223 g de folpel technique à 90 % de matière active
- 90 g d'une solution aqueuse à 2,5 % de polysaccharide

On a obtenu ainsi une bouillie liquide stable, prête à l'emploi, à 100 g/l de cuivre et 200 g/l de folpel, présentant les mêmes caractéristiques que la formulation de l'exemple 9.

### EXEMPLE 11

On a répété l'exemple 9 mais avec les constituants suivants :
- 1132 g de "pâte BB 50" diluée avec 106 g d'eau
- 40 g de lignosulfonate de sodium
- 5 g de naphtalènesulfonate de sodium
- 7,5 g de Bleu de Prusse
- 3,8 g d'anti-mousse silicone
- 21 g de cymoxanil technique à 96 % de matière active
- 90 g d'une solution aqueuse à 2,5 % de polysaccharide

On a obtenu ainsi une bouillie liquide stable, prête à l'emploi, à 150 g/l de cuivre et 20 g/l de cymoxanil, présentant les mêmes caractéristiques que la formulation de l'exemple 9.

Toutes les formulations des exemples 3 à 11 ont fait l'objet de tests de tropicalisation (stockage pendant 14 jours à 54°C) et ont montré une excellente stabilité au vieillissement.

## Revendications

1. Bouillie bordelaise dans laquelle la quasi totalité du cuivre est à l'état de brochantite et qui, à l'état sec, ne contient pas plus de 20 % en poids de bassanite.

2. Suspension aqueuse de bouillie bordelaise selon la revendication 1, caractérisée en ce que ses matières solides consistent essentiellement en environ 47 % en poids de brochantite et 53 % en poids de gypse.

3. Bouillie bordelaise sèche selon la revendication 1, caractérisée en ce qu'elle est constituée d'environ 47 % en poids de brochantite, de 33 à 53 % en poids de gypse et de 0 à 20 % en poids de bassanite.

4. Procédé de fabrication d'une bouillie bordelaise selon la revendication 1 ou 2, caractérisé en ce qu'il consiste à faire réagir une solution aqueuse de sulfate de cuivre et une suspension aqueuse de chaux dans un rapport molaire Ca(OH)₂/CuSO₄ compris entre 0,60 et 0,75, à une température et pendant un temps suffisants pour transformer la quasi totalité des complexes de cuivre en brochantite.

5. Procédé selon la revendication 4 dans lequel on ajoute la solution aqueuse de sulfate de cuivre dans la suspension aqueuse de chaux.

6. Procédé selon la revendication 4 ou 5 dans lequel le rapport molaire Ca(OH)₂ / CuSO₄ est compris entre 0,65 et 0,70 environ.

7. Procédé selon l'une des revendications 4 à 6 dans lequel la réaction est réalisée à une température allant de la température ambiante jusqu'à 90°C et, de préférence, comprise entre environ 40 et 70°C.

8. Procédé selon l'une des revendications 4 à 7 dans lequel on utilise une solution de sulfate de cuivre dont la teneur en cuivre est comprise entre 50 et 100 g/l et, plus particulièrement, entre 75 et 85 g/l.

9. Procédé selon l'une des revendications 4 à 8 dans lequel on utilise une suspension de chaux ayant une teneur en Ca(OH)₂ allant de 20 à 200 g/l et, de préférence, comprise entre 100 et 150 g/l.

10. Procédé de fabrication d'une bouillie bordelaise selon la revendication 3 qui consiste, éventuellement après une étape de concentration, à sécher une suspension aqueuse selon la revendication 2 dans des conditions telles que la teneur pondérale en cuivre du produit n'excède pas 27,3 %.

11. Utilisation d'une bouillie bordelaise selon la revendication 1 ou 2 pour la fabrication de compositions fongicides cupriques sous forme de granulés ou de suspensions concentrées, dispersibles dans l'eau.

12. Utilisation d'une bouillie bordelaise selon la revendication 1 ou 3 pour la fabrication de compositions fongicides cupriques sous forme de poudres mouillables, dispersibles dans l'eau.

13. Compositions fongicides cupriques à base d'une bouillie bordelaise selon l'une des revendications 1 à 3.

14. Application d'une composition selon la revendication 13 pour le traitement fongicide des cultures.

## Claims

1. Bordeaux mixture in which virtually all of the copper is in the form of brochantite and which, in dry form, contains not more than 20% by weight of bassanite.

2. Aqueous suspension of Bordeaux mixture according to Claim 1, characterized in that its solids essentially consist approximately of 47% by weight of brochantite and 53% by weight of gypsum.

3. Dry Bordeaux mixture according to Claim 1, characterized in that it consists approximately of 47% by weight of brochantite, from 33 to 53% by weight of gypsum and from 0 to 20% by weight of bassanite.

4. Process for the manufacture of a Bordeaux mixture according to Claim 1 or 2, characterized in that it consists in reacting an aqueous copper sulphate solution and an aqueous suspension of lime in a Ca(OH)₂/CuSO₄ molar ratio of between 0.60 and 0.75, at a temperature and for a period of time which are sufficient to convert virtually all of the copper complexes into brochantite.

5. Process according to Claim 4, in which the aqueous copper sulphate solution is added to the aqueous suspension of lime.

6. Process according to Claim 4 or 5, in which the Ca(OH)₂/CuSO₄ molar ratio is between 0.65 and 0.70 approximately.

7. Process according to one of Claims 4 to 6, in which the reaction is performed at a temperature ranging from room temperature to 90°C and preferably, of approximately between 40 and 70°C.

8. Process according to one of Claims 4 to 7, in which a copper sulphate solution whose copper content is between 50 and 100 g/l and, more particularly, between 75 and 85 g/l is used.

9. Process according to one of Claims 4 to 8, in which a suspension of lime having a Ca(OH)₂ content ranging from 20 to 200 g/l and, preferably, of between 100 and 150 g/l is used.

10. Process for the manufacture of a Bordeaux mixture according to Claim 3 which consists, after a possible step of concentration, in drying an aqueous suspension according to Claim 2 under conditions such that the weight content of copper in the product does not exceed 27.3%.

11. Use of a Bordeaux mixture according to Claim 1 or 2 for the manufacture of cupric fungicidal compositions in the form of granules or concentrated suspensions, which are dispersible in water.

12. Use of a Bordeaux mixture according to Claim 1 or 3, for the manufacture of cupric fungicidal compositions in the form of wettable powders, which are dispersible in water.

13. Cupric fungicidal compositions based on a Bordeaux mixture according to one of Claims 1 to 3.

14. Application of a composition according to Claim 13 for the fungicidal treatment of crops.

## Patentansprüche

1. Bordeaux-Brühe in welcher praktisch das gesamte Kupfer in Form von Brochantit vorliegt und welche in trockenem Zustand nicht mehr als 20Gew.% Bassanit enthält.

2. Wässerige Suspension einer Bordeaux-Brühe nach Anspruch 1, **dadurch gekennzeichnet**, daß ihre Feststoffe im wesentlichen aus etwa 47Gew.% Brochantit und 53Gew.% Gips bestehen.

3. Trockene Bordeaux-Brühe nach Anspruch 1, **dadurch gekennzeichnet**, daß sie aus etwa 47Gew.% Brochantit, 33 bis 53Gew% Gips und von 0 bis 20Gew.% Bassanit besteht.

4. Verfahren zur Herstellung einer Bordeaux-Brühe nach Anspruch 1 oder 2, **dadurch gekennzeichnet**, daß es daraus besteht, eine wässerige Kupfersulfatlösung und eine wässerige Kalksuspension in einem Molverhältnis Ca(OH)₂/CuSO₄ zwischen 0.60 und 0.75, bei einer Temperatur und während einer Zeitraumes miteinander reagieren zu lassen, um praktisch die gesamten Kupferkomplexe in Brochantit umzuwandeln.

5. Verfahren nach Anspruch 4, in welchem man die wässerige Kupfersulfatlösung zu der wässerigen Kalksuspension zusetzt.

6. Verfahren nach Anspruch 4 oder 5, in welchem das Molverhältnis Ca(OH)₂/CuSO₄ zwischen etwa 0.65 und 0.70 liegt.

7. Verfahren nach einem der Ansprüche 4 bis 6, in welchem die Reaktion bei einer Temperatur von Raumtemperatur bis zu 90°C und vorzugsweise von 40 bis 70°C vorgenommen wird.

8. Verfahren nach einem der Ansprüche 4 bis 7, in welchem man eine Kupfersulfatlösung verwendet, deren Gehalt an. Kupfer zwischen 50 und 100g/l und vorzugsweise zwischen 75 und 85g/l liegt.

9. Verfahren nach einem der Ansprüche 4 bis 8, in welchem man eine Kalksuspension verwendet, deren Gehalt an Ca(OH)₂ bei 20 bis 200g/l und vorzugsweise zwischen 100 und 150g/l liegt.

10. Verfahren zur Herstellung einer Bordeaux-Brühe nach Anspruch 3, das darin besteht, gegebenenfalls nach einem Schritt der Einengung, eine wässerige Suspension nach Anspruch 2 unter solchen Bedingungen zu trocknen, daß der Gewichtsgehalt an Kupfer des Produktes 27,3% nicht übersteigt.

11. Verwendung einer Bordeaux-Brühe nach Anspruch 1 oder 2 zur Herstellung von kupferhaltigen fungiziden Zusammensetzungen in körniger Form oder in Form konzentrierter Suspensionen, die in Wasser dispergierbar sind.

12. Verwendung einer Bordeaux-Brühe nach Anspruch 1 oder 3 zur Herstellung von kupferhaltigen fungiziden Zusammensetzungen in Form von benetzbaren Pulvern, die in Wasser dispergierbar sind.

13. Fungizide kupferhaltige Zusammensetzungen auf der Basis einer Bordeaux-Brühe gemäß einem der Ansprüche 1 bis 3.

14. Einsatz einer Zusammensetzung nach Anspruch 13 zur Fungizidbehandlung von Kulturen.
